# EUROPEAN PATENT SPECIFICATION

(11) **EP 4 549 796 B1**
(45) Date of publication and mention of the grant of the patent: **10.12.2025**
(21) Application number: 23206984.9
(22) Date of filing: 31.10.2023
(51) Int. Cl.: F16L 25/00

(54) **CONNECTOR FOR COUPLING A CORRUGATED DUCT TO A DUCTING COMPONENT, PARTIAL ASSEMBLY COMPRISING SAID CONNECTOR AND ASSEMBLY COMPRISING A CORRUGATED DUCT CONNECTED TO A DUCTING COMPONENT BY MEANS OF SAID CONNECTOR**
VERBINDER ZUM VERBINDEN EINER WELLROHRLEITUNG MIT EINEM LEITUNGSBAUTEIL, TEILANORDNUNG MIT EINEM WELLROHR
CONNECTEUR POUR RACCORDER UN CONDUIT ANNELÉ À UN COMPOSANT DE CANALISATION, ENSEMBLE PARTIEL COMPRENANT LEDIT CONNECTEUR ET ENSEMBLE COMPRENANT UN CONDUIT ANNELÉ RELIÉ À UN COMPOSANT DE CANALISATION

(43) Date of publication of application: 07.05.2025
(73) Proprietor: Ubbink B.V., 6984 AA Doesburg (NL)
(72) Inventor: MERTENS, Alwin, 6984 AA Doesburg (NL)
(74) Representative: van Dam, Vincent

(56) References cited:
- DE-U1- 20 001 802
- US-A- 5 285 013

## Description

The present invention relates to a connector for coupling a corrugated duct to a ducting component. The invention also relates to a partial assembly comprising said connector inserted into a ducting component. The invention also relates to an assembly comprising a corrugated duct connected to a ducting component by means of said connector.

In particular, the invention is aimed at connecting a corrugated duct, such as flexible or semi-rigid corrugated ducts in air systems, such as ventilation systems, with a ducting component, wherein this ducting component is a rigid ducting component with a non-corrugated or plain inner surface at least at its end part forming part of the connection. Examples of ducting components as referred to in the context of the present application include without limitation an adapter, bend, or rigid coupling element designed for coupling 2 or more flexible or semi-rigid corrugated ducts with each other.

Connectors of the click ring type can be used for this purpose. Examples of such connectors are known in the art.

US 5 285 013 A describes a connector for coupling non-metallic electrical conduit or tubing within an electrical box opening that is molded of plastic and is flexible and resilient and can be used with either plastic or steel electric boxes.

DE 200 01 802 U1 describes a quick-release connector for a protective cover of an electrical cable.

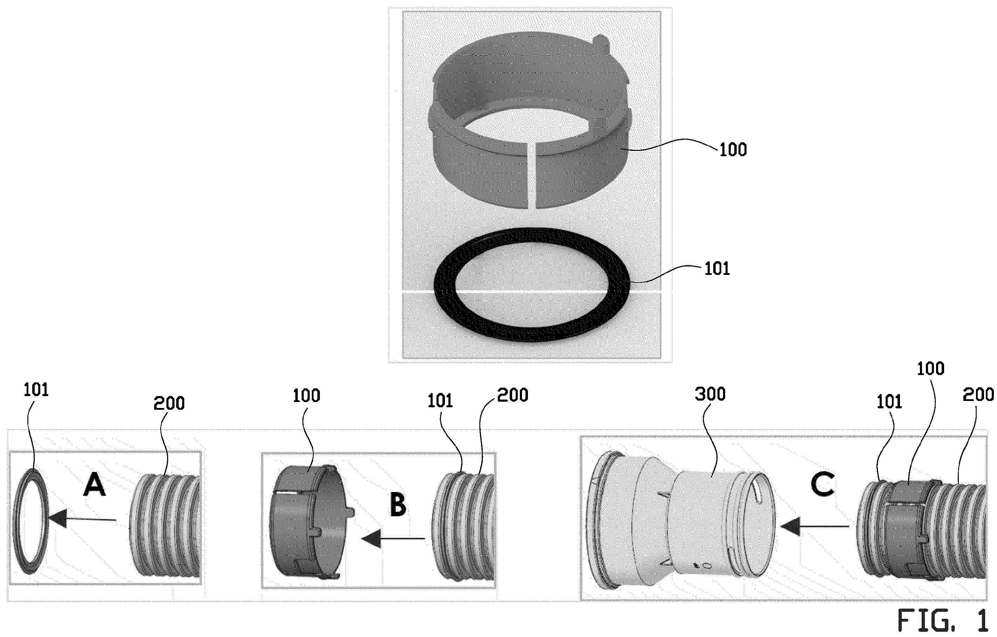

For instance, the Air Excellent (AE23C/AE34C/AE48C) Click Rings manufactured by and commercially available from the present applicant allows for connection of semi-rigid corrugated ducts with an adapter, bend, or rigid coupling element designed for coupling 2 or more flexible or semi-rigid corrugated ducts with each other. An example of the latter can be seen in Fig. 1, which shows click ring 100 which must be used in combination with a separate gasket or seal ring 101. For connecting a semi-rigid corrugated duct 200 with a ducting component, in this case adaptor 300 three actions are required. First, the sealing ring 101 has to be installed on the semi-rigid duct 200. To ensure a sealing connection, the position of the sealing ring needs to be determined carefully (panel A), wherein the exact position may vary per connection and the straightness of the end of semi-rigid duct 200. This is an error-prone action. Second, once the sealing ring 101 is installed the click ring 100 can be installed on the semi-rigid duct 200 at the desired position by sliding it over the semi-rigid duct 200 and clicking it in selected grooves of the corrugated duct 200 (panel B). Also at this stage, the position at which the click ring is clicked on the corrugated duct needs to be determined carefully, which is also an error-prone action. Third, once the click ring 100 and sealing ring 101 are fixed at the correct position the assembly of the corrugated duct 200, click ring 100 and sealing ring 101 are inserted into adapter 300 and fixed to it by a click mechanism (panel C). Although this way of connecting in principle works satisfactory, the process of connecting is error-prone, as explained above. Also, the careful determination of the positions at which the sealing ring and click ring need to be fixed may be time-consuming.

### Summary of the invention

The present invention aims to provide a way of connecting a corrugated duct to a ducting component which is less error-prone and less time consuming.

This aim is achieved by the provision of a connector for coupling a corrugated duct to a ducting component, wherein the connector has a ring-shaped body, having a first end and a second end, wherein the first end is for insertion into said ducting component and wherein said second end is configured to insert a corrugated duct therein, wherein the ring-shaped body comprises a rigid portion and an elastic portion; wherein a first part of the elastic portion extends in inner and outer circumferential direction over the full inner and outer perimeter of the ring-shaped body, and wherein a second part of the elastic portion extends in axial direction of the ring-shaped body and interconnects opposite parts of the rigid portion; wherein the rigid portion comprises a plurality of first protrusions facing to the inside of the ring-shaped body, configured to engage in a groove of a corrugated duct when said corrugated duct is inserted into the ring-shaped body; and wherein the rigid portion also comprises at least one outer fixation means on the outer surface of the ring-shaped body, configured to engage with said ducting component when said connector is inserted into said ducting component; wherein the connector comprises on the first end of the ring-shaped body one or more second protrusions extending inward and configured to form a seating for the end of said corrugated duct when inserted into the ring-shaped body; and wherein said first protrusions are arranged in an axially staggered position with regard to said second protrusions.

The invention also relates to a partial assembly comprising a ducting component such as an adapter, bend, or rigid coupling element designed for coupling 2 or more flexible or semi-rigid corrugated ducts with each other, which is in particular a rigid ducting component with a non-corrugated or plain inner surface at least at its end part forming part of the connection, and a connector according to the invention inserted therein.

The invention also relates to a duct assembly comprising a corrugated duct connected to a ducting component by means of said connector. In other words, the invention also relates to a duct assembly comprising a corrugated duct connected to a ducting component by means of a connector, wherein the connector has a ring-shaped body, having a first end and a second end, wherein the first end is inserted into said ducting component and wherein said corrugated duct is inserted into said second end; wherein the ring-shaped body comprises a rigid portion and an elastic portion; wherein a first part of the elastic portion extends in inner and outer circumferential direction over the full inner and outer perimeter of the ring-shaped body, and wherein a second part of the elastic portion extends in axial direction of the ring-shaped body and interconnects opposite parts of the rigid portion; wherein the rigid portion comprises a plurality of first protrusions facing to the inside of the ring-shaped body, which engage in a groove of said corrugated duct; and wherein the rigid portion also comprises at least one outer fixation means on the outer surface of the ring-shaped body, which engages with said ducting component; wherein the connector comprises on the first end of the ring-shaped body one or more second protrusions extending inward of the ring-shaped body, wherein the end of said corrugated duct inserted into the ring-shaped body seats on said second protrusions; and wherein said first protrusions are arranged in an axially staggered position with regard to said second protrusions.

Further, embodiments and advantages of the present invention will be disclosed below.

### Short description of the drawings

Fig. 1 shows a prior art connector assembly for connecting a corrugated duct to a ducting component.
Fig. 2A shows a perspective view at the second end of a connector according to an exemplary embodiment of the invention.
Fig. 2B shows a perspective view at the first end of a connector according to an embodiment of Fig. 2A.
Fig. 3 shows a lock-snap as used in the connector of Fig.2 in more detail.
Fig. 4 shows the seal ring as used in the connector of Fig.2 in more detail.
Fig. 5 shows an exemplary assembly for connecting a corrugated duct to a ducting component in accordance with the invention.
Fig. 6 shows how a connector according to further exemplary embodiment of the invention is fixed on a corrugated duct.

### Detailed description of the invention

The connector of the present invention is a connector of the click ring type and comprises the sealing ring integrated with the ring. This avoids the need for using a separate sealing ring. The use of an integrated sealing ring makes it possible to mount the assembly of the invention in a single action, in particular if the connector is provided partially preassembled on a corrugated duct or in a ducting component to which the corrugated duct is to be connected. In this context it is in particular preferred to provide a partially pre-assembled assembly of the connector in an adapter, bend, or rigid coupling element designed for coupling 2 or more flexible or semi-rigid corrugated ducts with each other.

Because the integrated sealing ring and the various fixation means for fixing (in particular clicking) the connector to the corrugated duct and the ducting component are all positioned on predetermined positions with respect to each other and based on the position of the respective interacting fixation means on the corrugated duct and the ducting component, installation is error-proof.

As mentioned above, the connector has a ring-shaped body, having a first end and a second end.

Herein, the second end is configured to insert a corrugated duct therein. In this interaction the connector functions as a female part with respect to this corrugated duct, which at its turn functions as a male part.

On the other hand, the first end of the connector is configured for insertion into the ducting component. The term ducting component in this context is meant to encompass any ducting component with a non-corrugated or plain inner surface at least at its end part that forms part of the connection with the connector. In this sense it is to be understood that in the context of the present invention the terms "corrugated duct" and "ducting component" refer to different elements. Before connecting takes place, the corrugated duct in this context may be a duct as a separate entity or a duct that already is part of an assembly. Non-limiting examples of ducting components in the present context may include an adapter, bend, or rigid coupling element designed for coupling 2 or more flexible or semi-rigid corrugated ducts with each other. In this interaction the connector functions as a male part with respect to this ducting component, which at its turn functions as a female part.

The dimensions of the connector, and in particular the inner and outer perimeter, should be chosen such that the corrugated duct can be inserted therein in a substantially fitting manner that allows sealing between these two components. On the other hand, the dimensions should also be such that the connector can be inserted in the ducting component in a substantially fitting manner that allows sealing between the latter two components. Ducts and ducting components have standard sizes, which facilitates the design of such dimensions.

The ring-shaped body of the connector comprises a rigid portion made of a rigid material which forms the main part of the ring-shaped body and an elastic portion. The material constituting the rigid portion in this respect may be any conventional rigid material used for ducting components, including but not limited to polyethylene, polyvinyl chloride, polypropylene, in particular polypropylene. The elastic portion may be made of any elastic material that is capable of providing a sealing connection, for example a sealing rubber. Thermoplastic elastomers are particularly suitable in this context. Non-limiting examples of sealing rubbers include nitril butadiene rubber, EPDM, fluoro elastomers such as Viton, and silicone rubbers.

The elastic portion as provided in the connector essentially serves two functions, a sealing function and an expansion function. In order to achieve this dual functionality, a first part of the elastic portion extends in inner and outer circumferential direction over the full inner and outer perimeter of the ring-shaped body and predominantly serves a sealing function. A second part of the elastic portion extends in axial direction of the ring-shaped body and interconnects opposite parts of the rigid portion and predominantly serves an expansion function.

Accordingly, the first part of the elastic portion serves as an integrated seal with double sealing function: a first sealing between the connector and the corrugated duct and a second sealing between the connector and the ducting component. It is preferred in this context that the first part of the elastic portion interconnects opposite parts of the rigid portion of the ring-shaped body. In other words, in this embodiment the first part functions as an integral sealing ring between the upper and lower part of the rigid portion and this connects the upper and lower part to form a union. In other words, in this embodiment the rigid portion is basically designed as two open rings which are interconnected by and wherein the rings are closed by the elastic portion. This is not only advantageous in the sense of production and handling; the full and continuous elastic ring continuously extending in the circumference of the ring-shaped body also allows increased tolerance with regard to deviations of dimensions of the components of the eventual assembly in accordance with the invention and facilitates mounting and demounting such an assembly.

In one embodiment the elastic portion extending over the inner perimeter of the ring-shaped body is configured to form a slot to engage a ridge of a corrugated duct when said corrugated duct is inserted into the ring-shaped body can be engaged by said elastic portion. In addition, or alternatively, the elastic portion extending over the inner perimeter of the ring-shaped body is configured to form an inwardly protruding sealing ring portion to engage in a groove of a corrugated duct when said corrugated duct is inserted into the ring-shaped body. These features contribute to a reliable sealing and at the same time contribute to fixation of the corrugated duct inside the connector. On the outer surface of the connector the sealing ring preferably protrudes from the surface of the ring-shaped body in order to ensure a tight seal with the ducting component into which the connector is inserted.

The second part of the elastic portion extends in axial direction of the ring-shaped body and interconnects opposite parts of the rigid portion and predominantly serves an expansion function. In other, words the second part of the elastic portion runs from the first end to the second end of the ring-shaped body and connects opposite ends of the rigid portion at their sides. This configuration allows a tolerance with respect to deviations of outer diameters of corrugated ducts and also of inner diameters of the ducting component into which the connector is inserted. Simultaneously, it also provides a degree of flexibility to the ring-shaped body for mounting and demounting the connector in particular on and from the corrugated duct. The width of the second part (and also the first part) of the elastic portion should be chosen such that said tolerance and flexibility are achieved, but at the same time integrity and fixability of the connector are ensured. In practice this means that the width of the second portion may for instance suitably vary between 0,5 and 3 cm. Although it is not a prerequisite, the inner and outer surfaces of second part of the elastic portion in principle coincide with the inner and outer surface of the rigid portions it connects, except for the intersection with the first part of the elastic portion, where a continuous sealing configuration is necessary to provide a sealing connection between the components of the assembly according to the invention.

In order to allow fixation of the connector to the inserted corrugated duct, the rigid portion comprises at least one first protrusion facing to the inside of the ring-shaped body, configured to engage in a groove of a corrugated duct when said corrugated duct is inserted into the ring-shaped body. This may for instance be a single, long protrusion extending in axial direction but is preferred to use multiple smaller first protrusions, preferably distributed in an axial plane over the inner perimeter of the ring-shaped body. In a particular suitable embodiment 3 of these first protrusions are used. Once mounted, the first protrusion(s) engage in a groove of said corrugated duct in order to provide a click connection, by clicking the first protrusions into respective grooves of the inserted corrugated duct.

The connector comprises on the first end of the ring-shaped body (i.e. the end inserted in the ducting component) one or more inward facing second protrusions configured to form a seating for the end of said corrugated duct when inserted into the ring-shaped body. In a preferred embodiment the connector comprises on the first end of the ring-shaped body a number of first extensions in axial direction, wherein said first extensions have said second protrusions extending inward, or in other words in radial direction, of the ring-shaped body. This way said second protrusions form a seating for the end of said corrugated duct when inserted into the ring-shaped body. Accordingly, these first extensions have, as seen in an axial cross section, an L-shaped lip. This way, when installed the end of said corrugated duct inserted into the ring-shaped body seats on said second protrusions. Multiple of these lips are provided, for instance 3 or 4. Because the second protrusions form a seating for the end of the corrugated duct inserted into the connector, they effectively limit the depth to which the corrugated duct can be inserted. This guarantees the maximum and correct depth at which the corrugated duct must be mounted into the connector. To ensure this, and proper fixation by clicking the first protrusions into a groove of the inserted corrugated duct, the connector comprises a plurality of said first protrusions wherein said first protrusions are arranged in an axially staggered position with regard to said second protrusions.

The first protrusions are suitably located close to the first end of the connector. In this context it is preferred that the first protrusions are located in recesses defined between said first extensions in axial direction. This facilitates mounting as it provides some flexibility. It is further preferred that said first protrusions extend from a tab that extends from a base of said recesses in axial direction toward the first end. This way the first protrusions can be configured as a "lock-snap" gearing into a groove of the inserted corrugated duct. These lock-snaps can be designed to facilitate assembly and disassembly into a groove of a corrugated duct, so that the lock-snap may bend backwards to give space for easy mounting of the corrugated duct by reducing the assembly force required. The lock-snap is preferably also designed such that when the lock-snap is pushed against the corrugated duct, the lock snap will expand backwards to disengage it from the corrugated duct groove allowing disassembly of the click ring connector from the corrugated duct.

For fixation to the ducting component into which the connector is inserted such as the above mentioned adapter, bend, or rigid coupling element designed for coupling 2 or more flexible or semi-rigid corrugated ducts with each other, wherein the rigid portion also comprises at least one outer fixation means on the outer surface of the ring-shaped body, configured to engage with a ducting component when said connector is inserted into said ducting component. In a preferred embodiment the connector for this purpose comprises on the outer surface of the rigid portion of the ring-shaped body at least one protrusion, preferably two extending in circumferential direction over a part of the outer perimeter of the ring-shaped body and configured to engage in a corresponding recess of a ducting component when the connector is inserted into said ducting component. For this purpose, the corresponding ducting component into which the connector is inserted, needs to be provided with such a recess before mounting the connector into it. The advantage of clicking the connector into the recess of the ducting component into which it is inserted is that it allows easy mounting and demounting by twisting the connector in radial direction with respect to the ducting component into which it is inserted. This way the protrusion on the outer surface of the connector can be clicked in and out of the recess of said ducting component. This ensures correct assembly and prevents the connector from being detached from the ducting component into which it is inserted when a pulling force is exerted. As a further insurance in this respect, the connector may comprise on that second end of the ring-shaped body a number third protrusions extending outward in axial direction of the ring-shaped body, said third protrusions configured to abut to the end of the ducting component when the connector is inserted therein. As such these third protrusions further ensure that the connector is inserted into the ducting component at the maximum and correct depth.

In order to facilitate twisting the connector in radial direction with respect to the ducting component into which it is inserted in order to mount and demount it, it is preferred that the connector also comprises on the second end of the ring-shaped body at least one tab extending in axial direction. This may be single tab, but it is preferred that multiple tabs are used, for instance 3 or 4. These tab(s) is/are configured to stick out of the ducting component into which the connector is inserted when the assembly is installed. This way that the tab(s) can be used as a twist-handle for manually or mechanically twisting the connector in radial direction with respect to the ducting component into which it is inserted in order to mount and demount it whenever this is desired, for instance in case of maintenance, replacement and/or repair. In a suitable embodiment said tabs comprise one or more nocks facing inward of the ring-shaped body and configured to engage in a groove of a corrugated duct when said corrugated duct is inserted into the ring-shaped body. This way these nocks can be used as a position indicator for the correct position of the inserted corrugated duct and further increase the stability of the connection.

The present invention is in particular applicable in the field of air systems, including but not limited to heating, ventilating and/or air conditioning systems.

### Detailed description of the drawings

The following drawings are meant to illustrate the present invention and not to limit the scope of the claims. Corresponding reference numbers refer to the same features.

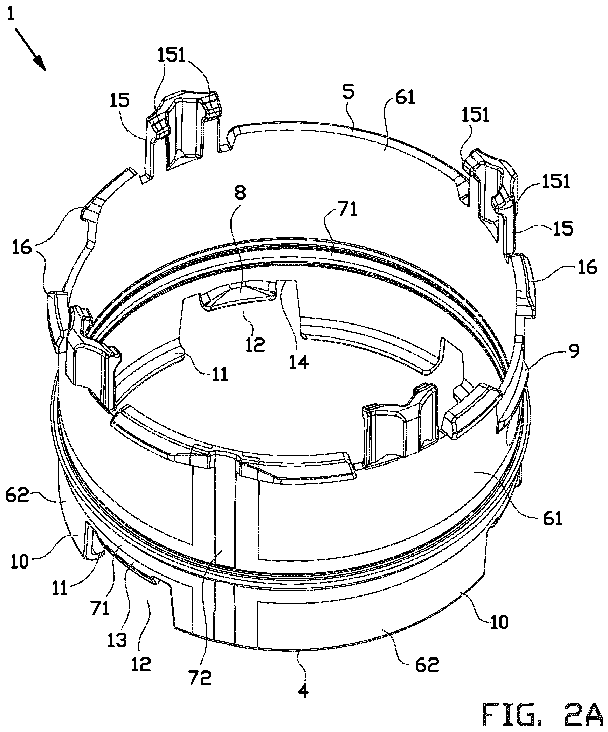

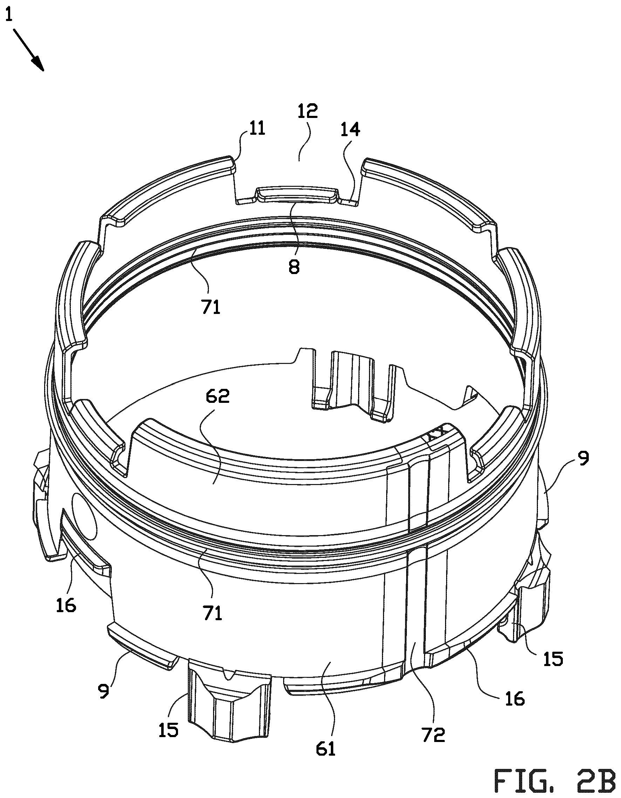

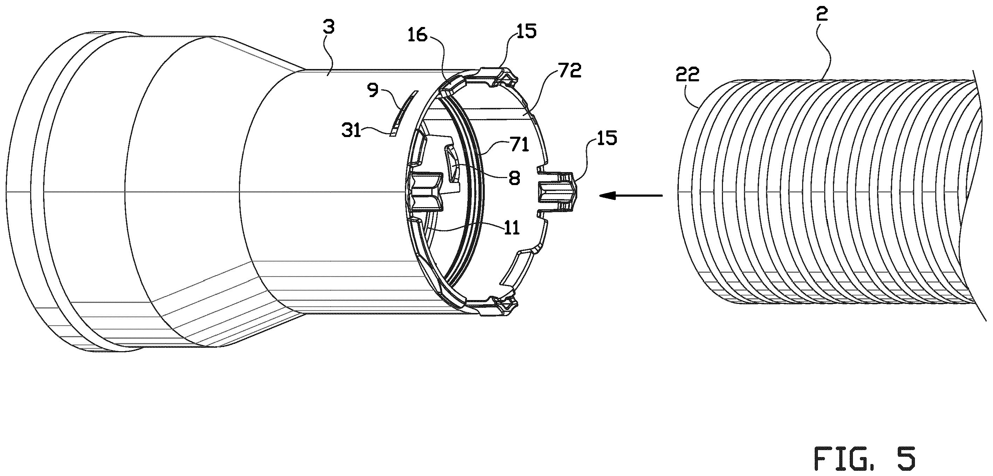

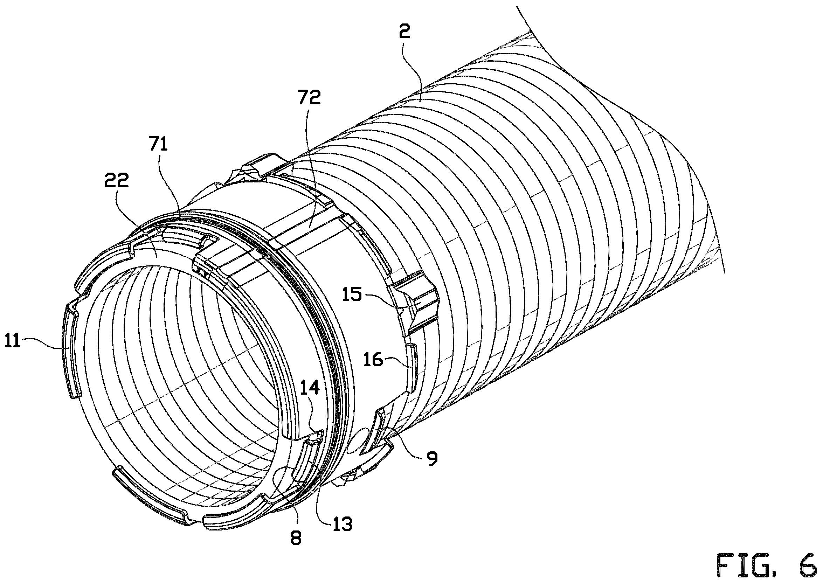

In Fig. 2-6 an exemplary embodiment of a connector 1 according to the invention is shown. Figs. 2-4 show the connector 1 as such. In Fig. 5 the connector 1 is assembled into a ducting component 3, in this case an adapter. In Fig. 6, a corrugated duct 2 is inserted into the connector 1.

Fig. 2A shows a perspective view towards the second end 5 of the connector 1, or in other words the end into which a corrugated duct 2 can be inserted. Fig. 2B shows a perspective view towards the first end 4 of the connector, or in other words the end that is inserted into a ducting component 3. The connector 1 has a ring-shaped body, which comprises a rigid portion 61, 62 of a rigid material; and an elastic portion 71, 72 of an elastic material.

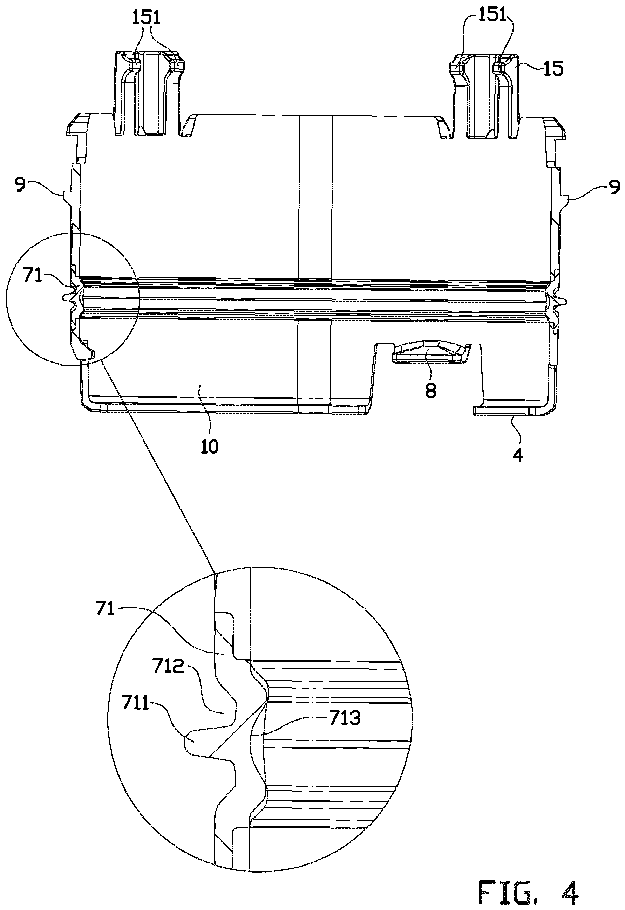

In the embodiment of Fig. 2 the first part 71 of the elastic portion extends in inner and outer circumferential direction over the full inner and outer perimeter of the ring-shaped body and interconnects part 61 of the rigid portion of the ring-shaped body with part 62 of the rigid portion of the ring-shaped body. In other words, the first part of the elastic portion functions as an integral sealing ring between the upper and lower part of the rigid portion and this connects the upper and lower part to form a union. As shown in detail in Fig. 4 the elastic portion extending over the inner perimeter of the ring-shaped body is configured to form a slot 713 to engage a ridge of a corrugated duct 2 when said corrugated duct is inserted into the ring-shaped body. On the outer surface of the connector the sealing ring protrudes with a lip 711 from the surface of the ring-shaped body in order to ensure a tight seal. Lip 711 is neighbored by recesses 712 on both sides which allows a tolerance with respect to deviations of the inner diameters of the ducting component 3 into which the connector is inserted.

The second part 72 of the elastic portion extends in axial direction of the ring-shaped body and interconnects opposite ends of the rigid portion 61, 62 at their sides. This also contributes to a tolerance with respect to deviations of outer diameters of corrugated ducts and also of inner diameters of the ducting component 3 into which the connector 1 is inserted.

The rigid portion 61, 62 comprises at least one first protrusion 8 on the inner surface of the ring-shaped body, configured to engage in a groove of a corrugated duct when said corrugated duct is inserted into the ring-shaped body.

On the first end 4 of the ring-shaped body in this embodiment a number of first extensions 10 in axial direction are provided, wherein said extensions have second protrusions 11 extending inward in radial direction of the ring-shaped body, said second protrusions configured to form a seating for the end 22 of corrugated duct 2 when inserted into the ring-shaped body. This is shown in detail in Fig. 6.

As shown in the embodiment of Fig. 2-6 the first protrusions 8 are arranged in an axially staggered position with regard to said second protrusions 11 that form the seating, to ensure proper fixation by clicking the first protrusions 8 into a groove of the inserted corrugated duct.

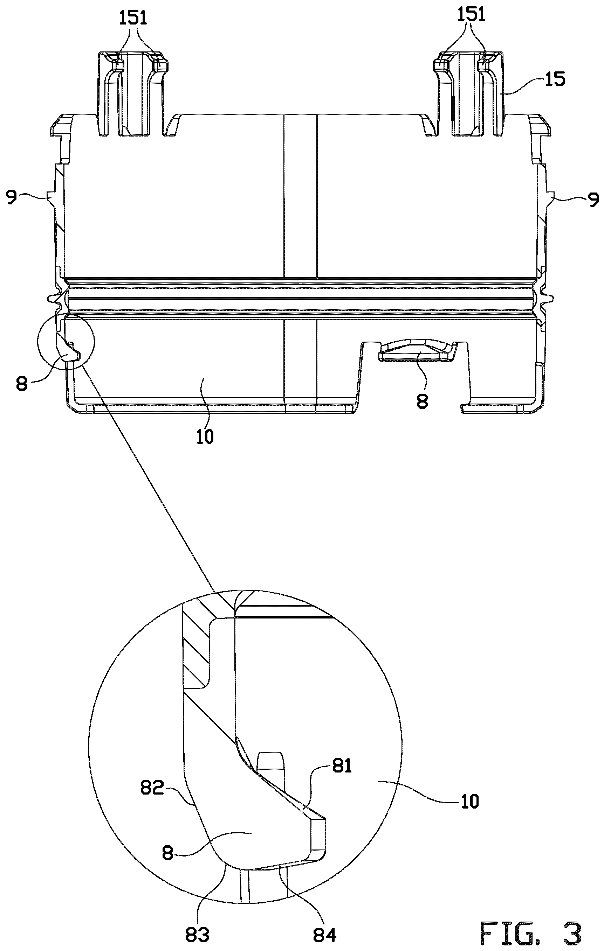

In the present embodiment said first protrusions 8 are located in recesses 12 defined between said first extensions in axial direction. This facilitates mounting as it provides some flexibility. In the present embodiment said first protrusions 8 extend from a tab 13 that extends from a base 14 of said recesses in axial direction toward the first end 4. This way the first protrusions 8 can be configured as "lock-snap" gearing into a groove of the inserted corrugated duct, which is shown in more detail in Fig.3. In Fig. 3 the first protrusions 8 are configured as "lock-snap" gearing into a groove of the inserted corrugated duct. The lock-snaps has a mount angle 81 designed to facilitate assembly into a groove of a corrugated duct. On the other hand, expansion gap angle 82 allows the lock-snap 8 to bend backwards giving space for an easier mount of the corrugated duct by reducing the assembly force required. The demount radius 83 is chosen such that in combination with demount angle 84, when the lock-snap is pushed against the corrugated duct, it will bend the lock-snap 8 backwards to disengage it from the corrugated duct groove to allow disassembly of the connector from the corrugated duct.

The rigid portion 61, 62 also comprises at least one outer fixation means 9, 16 on the outer surface of the ring-shaped body, configured to engage with said ducting component 3 when said connector 1 is inserted into said ducting component 3. In the present embodiment the outer surface of the rigid portion of the ring-shaped body two protrusions 9 extending in circumferential direction over a part of the outer perimeter of the ring-shaped body and configured to engage in a corresponding recess 31 of ducting component 3 when the connector is inserted into said ducting component. The latter situation is depicted in Fig. 5. The advantage of clicking protrusion 9 into the recess 31 of the ducting component 3 into which the connector is inserted is that it allows easy mounting and demounting by twisting the connector 1 in radial direction with respect to the ducting component 3 into which it is inserted. This ensures correct assembly and prevents the connector 1 from being detached from the ducting component into which it is inserted when a pulling force is exerted. As a further insurance in this respect, the connector 1 may comprise on that second end 5 of the ring-shaped body a number third protrusions 16 extending outward in axial direction of the ring-shaped body, said third protrusions 16 configured to abut to the end of the ducting component 3 when the connector is inserted therein (see Fig. 5) As such these third protrusions 16 further ensure that the connector 1 is inserted into the ducting component 3 at the correct depth.

In order to facilitate twisting the connector 1 in radial direction with respect to the ducting component 3 into which it is inserted in order to mount and demount it, the connector 1 of this embodiment also comprises on the second end 5 of the ring-shaped body 4 tabs 15 extending in axial direction. These tabs 15 are configured to stick out of the ducting component 3 into which the connector 1 is inserted as can be seen in detail in Fig. 5. This way the tabs 15 can be used as a twist-handle for manually or mechanically twisting the connector 1 in radial direction with respect to the ducting component 3 into which it is inserted in order to mount and demount it whenever this is desired. In the present embodiment said tabs each comprise two nocks 151 facing inward of the ring-shaped body and configured to engage in a groove of a corrugated duct 2 when said corrugated duct 2 is inserted into the connector 1. This way these nocks 151 can be used as a position indicator for the correct position of the inserted corrugated duct 2 and further increase the stability of the connection.

## Claims

1. Connector (1) for coupling a corrugated duct (2) to a ducting component (3),
wherein the connector (1) has a ring-shaped body, having a first end (4) and a second end (5), wherein the first end (4) is for insertion into said ducting component (3) and wherein said second end (5) is configured to insert a corrugated duct (2) therein,
wherein the ring-shaped body comprises a rigid portion (61, 62) and an elastic portion (71, 72);
wherein a first part of the elastic portion (71) extends in inner and outer circumferential direction over the full inner and outer perimeter of the ring-shaped body, and wherein a second part of the elastic portion (72) extends in axial direction of the ring-shaped body and interconnects opposite parts of the rigid portion (61, 62);
wherein the rigid portion (61, 62) comprises a plurality of first protrusions (8) facing to the inside of the ring-shaped body, configured to engage in a groove of a corrugated duct (2) when said corrugated duct (2) is inserted into the ring-shaped body;
and wherein the rigid portion (61, 62) also comprises at least one outer fixation means (9, 16) on the outer surface of the ring-shaped body, configured to engage with said ducting component (3) when said connector (1) is inserted into said ducting component (3);
wherein the connector comprises on the first end (4) of the ring-shaped body second protrusions (11) extending inward and configured to form a seating for the end (22) of said corrugated duct (2) when inserted into the ring-shaped body;
**characterized in that** said first protrusions (8) are arranged in an axially staggered position with regard to said second protrusions (11).

2. Connector (1) according to claim 1, wherein the first part of the elastic portion (71) interconnects opposite parts of the rigid portion (61, 62) of the ring-shaped body.

3. Connector according to claim 1 or 2, wherein the connector (1) comprises on the first end (4) of the ring-shaped body a number of first extensions (10) in axial direction, wherein said first extensions (10) have said second protrusions (11) extending inward and configured to form a seating for the end (22) of said corrugated duct (2) when inserted into the ring-shaped body.

4. Connector (1) according to claim 3, wherein said first protrusions (8) are located in recesses (12) defined between said first extensions (10) in axial direction,
preferably wherein said first protrusions (8) extend from a tab (13) that extends from a base (14) of said recesses (12) in axial direction toward the first end (4).

5. Connector (1) according to any of the previous claims, wherein the elastic portion (71) extending over the inner perimeter of the ring-shaped body is configured to
form a slot (713) to engage a ridge of a corrugated duct (2) when said corrugated duct (2) is inserted into the ring-shaped body; and/or
to form an inwardly protruding sealing ring portion to engage in a groove of a corrugated duct (2) when said corrugated duct (2) is inserted into the ring-shaped body.

6. Connector (1) according to any of the previous claims, which comprises on the outer surface of the rigid portion (61, 62) of the ring-shaped body at least one protrusion (9) extending in circumferential direction over a part of the outer perimeter of the ring-shaped body and configured to engage in a corresponding recess (31) of a ducting component (3) when the connector (1) is inserted into said ducting component(3),
preferably wherein the connector (1) also comprises on the second end (5) of the ring-shaped body a number of tabs (15) extending in axial direction, preferably wherein said tabs (15) comprise one or more nocks (151) facing inward of the ring-shaped body and configured to engage in a groove of a corrugated duct (2) when said corrugated duct (2) is inserted into the ring-shaped body.

7. Partial assembly comprising a ducting component (3) such as an adapter, bend, or rigid coupling element designed for coupling 2 or more flexible or semi-rigid corrugated ducts with each other, which is in particular a rigid ducting component with a non-corrugated or plain inner surface at least at its end part forming part of the connection, and a connector (1) according to the previous claims inserted therein.

8. Duct assembly comprising a corrugated duct (2) connected to ducting component (3) by means of a connector (1) according to claim 1;
wherein the first end (4) is inserted into said ducting component (3) and wherein said corrugated duct (2) is inserted into said second end (5);
wherein the plurality of first protrusions (8) engage in a groove of said corrugated duct (2);
wherein the at least one outer fixation means (9, 16) engages with said ducting component (3);
wherein the end (22) of said corrugated duct (2) inserted into the ring-shaped body seats on said second protrusions (11).

9. Duct assembly according to claim 8, wherein the first part of the elastic portion (71) of the connector (1) interconnects opposite parts of the rigid portion (61, 62) of the ring-shaped body.

10. Duct assembly according to claim 8 or 9, wherein the connector (1) comprises a number of first extensions (10) in axial direction, wherein said first extensions (10) have second protrusions (11) extending inward of the ring-shaped body, wherein the end (22) of said corrugated duct (2) inserted into the ring-shaped body seats on said second protrusions (11).

11. Duct assembly according to any of the claims 8 to 10, wherein said first protrusions of the connector (1) are located in recesses (12) defined between said first extensions (10) in axial direction; preferably wherein said first protrusions (8) extend from a tab (13) that extends from a base (14) of said recesses (12) in axial direction toward the first end (4).

12. Duct assembly according to any of the claims 9 to 11, wherein the elastic portion (71) extending over the inner perimeter of the ring-shaped body of the connector (1):
forms a slot (713) engaging with a ridge of said inserted corrugated duct (2); and/or
forms an inwardly protruding sealing ring portion engaging with a groove of said inserted corrugated duct (2).

13. Duct assembly according to any of the claims 8 to 12, wherein the connector (1) comprises on the outer surface of the rigid portion (61, 62) of the ring-shaped body at least one protrusion (9) extending in circumferential direction over a part of the outer perimeter of the ring-shaped body and engaging in a corresponding recess (31) of said ducting component (3) wherein the connector (1) is inserted;
preferably wherein the connector (1) also comprises on the second end (5) of the ring-shaped body a number of tabs (15) extending in axial direction and which stick out from said ducting component (3) when the connector (1) is inserted therein,
preferably wherein said tabs (15) comprise one or more nocks (151) facing inward of the ring-shaped body which engage in a groove of said inserted corrugated duct (2).

## Patentansprüche

1. Verbinder (1) zum Koppeln eines Wellrohrs (2) mit einer Leitungskomponente (3),
wobei der Verbinder (1) einen ringförmigen Körper mit einem ersten Ende (4) und einem zweiten Ende (5) aufweist, wobei das erste Ende (4) zum Einsetzen in die Leitungskomponente (3) vorgesehen ist und wobei das zweite Ende (5) dazu konfiguriert ist, darin ein Wellrohr (2) einzusetzen,
wobei der ringförmige Körper einen starren Abschnitt (61, 62) und einen elastischen Abschnitt (71, 72) umfasst;
wobei sich ein erster Teil des elastischen Abschnitts (71) in innerer und äußerer Umfangsrichtung über den gesamten inneren und äußeren Umfang des ringförmigen Körpers erstreckt, und wobei sich ein zweiter Teil des elastischen Abschnitts (72) in axialer Richtung des ringförmigen Körpers erstreckt und gegenüberliegende Teile des starren Abschnitts (61, 62) miteinander verbindet;
wobei der starre Abschnitt (61, 62) eine Vielzahl erster Vorsprünge (8) umfasst, die zur Innenseite des ringförmigen Körpers gerichtet sind und dazu konfiguriert sind, in eine Rille eines Wellrohrs (2) einzugreifen, wenn das Wellrohr (2) in den ringförmigen Körper eingesetzt wird;
und wobei der starre Abschnitt (61, 62) außerdem mindestens ein äußeres Befestigungsmittel (9, 16) an der Außenoberfläche des ringförmigen Körpers umfasst, das dazu konfiguriert ist, mit der Leitungskomponente (3) in Eingriff zu kommen, wenn der Verbinder (1) in die Leitungskomponente (3) eingesetzt wird,
wobei der Verbinder am ersten Ende (4) des ringförmigen Körpers zweite Vorsprünge (11) aufweist, die sich nach innen erstrecken und dazu konfiguriert sind, einen Sitz für das Ende (22) des Wellrohrs (2) zu bilden, wenn dieses in den ringförmigen Körper eingesetzt ist;
**dadurch gekennzeichnet, dass** die ersten Vorsprünge (8) in einer axial versetzten Position in Bezug auf die zweiten Vorsprünge (11) angeordnet sind.

2. Verbinder (1) gemäß Anspruch 1, wobei der erste Teil des elastischen Abschnitts (71) gegenüberliegende Teile des starren Abschnitts (61, 62) des ringförmigen Körpers miteinander verbindet.

3. Verbinder (1) gemäß Anspruch 1 oder 2, wobei der Verbinder (1) am ersten Ende (4) des ringförmigen Körpers eine Anzahl erster Verlängerungen (10) in axialer Richtung aufweist, wobei die ersten Verlängerungen (10) die zweiten Vorsprünge (11) aufweisen, die sich nach innen erstrecken und dazu konfiguriert sind, einen Sitz für das Ende (22) des Wellrohrs (2) zu bilden, wenn dieses in den ringförmigen Körper eingesetzt ist.

4. Verbinder (1) gemäß Anspruch 3, wobei die ersten Vorsprünge (8) in Ausnehmungen (12) angeordnet sind, die zwischen den ersten Verlängerungen (10) in axialer Richtung definiert sind,
wobei vorzugsweise sich die ersten Vorsprünge (8) von einer Lasche (13) aus erstrecken, die sich von einer Basis (14) der Ausnehmungen (12) in axialer Richtung zum ersten Ende (4) hin erstreckt.

5. Verbinder (1) gemäß einem der vorhergehenden Ansprüche, wobei der elastische Abschnitt (71), der sich über den inneren Umfang des ringförmigen Körpers erstreckt, dazu konfiguriert ist
einen Schlitz (713) zu bilden, um mit einer Rippe eines Wellrohrs (2) in Eingriff zu kommen, wenn das Wellrohr (2) in den ringförmigen Körper eingesetzt wird; und/oder
einen nach innen vorstehenden Dichtungsringabschnitt zu bilden, um in eine Rille des Wellrohrs (2) einzugreifen, wenn das Wellrohr (2) in den ringförmigen Körper eingesetzt wird.

6. Verbinder (1) gemäß einem der vorhergehenden Ansprüche, der an der Außenoberfläche des starren Abschnitts (61, 62) des ringförmigen Körpers mindestens einen Vorsprung (9) aufweist, der sich in Umfangsrichtung über einen Teil des äußeren Umfangs des ringförmigen Körpers erstreckt und dazu konfiguriert ist, in eine entsprechende Ausnehmung (31) einer Leitungskomponente (3) einzugreifen, wenn der Verbinder (1) in die Leitungskomponente (3) eingesetzt wird;
wobei vorzugsweise der Verbinder (1) außerdem am zweiten Ende (5) des ringförmigen Körpers eine Anzahl von Laschen (15) aufweist, die sich in axialer Richtung erstrecken, wobei vorzugsweise die Laschen (15) eine oder mehrere Nocken (151) umfassen, die vom ringförmigen Körper nach innen gerichtete sind und die dazu konfiguriert sind, in eine Rille eines Wellrohrs (2) eingreifen, wenn das Wellrohr (2) in den ringförmigen Körper eingesetzt wird.

7. Teilanordnung, umfassend eine Leitungskomponente (3), wie einen Adapter, einen Bogen oder ein starres Koppelelement, das dazu ausgebildet ist, zwei oder mehr flexible oder halbstarre Wellrohre miteinander zu koppeln, wobei es sich insbesondere um eine starre Leitungskomponente mit einer nicht gewellten oder glatten Innenfläche zumindest in ihrem Endbereich handelt, der einen Teil der Verbindung bildet, und einen in diese eingesetzten Verbinder (1) gemäß den vorhergehenden Ansprüchen.

8. Leitungsanordnung, umfassend ein Wellrohr (2), das mittels eines Verbinders (1) gemäß Anspruch 1 mit einer Leitungskomponente (3) verbunden ist,
wobei das erste Ende (4) in die Leitungskomponente (3) eingesetzt ist und wobei das Wellrohr (2) in das zweite Ende (5) eingesetzt ist;
wobei die Vielzahl erster Vorsprünge (8) in eine Rille des Wellrohrs (2) eingreift;
wobei das mindestens ein äußeres Befestigungsmittel (9, 16) mit der Leitungskomponente (3) in Eingriff kommt;
wobei das Ende (22) des besagten Wellrohrs (2), das in den ringförmigen Körper eingesetzt ist, auf den zweiten Vorsprüngen (11) aufsitzt.

9. Leitungsanordnung gemäß Anspruch 8, wobei der erste Teil des elastischen Abschnitts (71) des Verbinders (1) gegenüberliegende Teile des starren Abschnitts (61, 62) des ringförmigen Körpers miteinander verbindet.

10. Leitungsanordnung gemäß Anspruch 8 oder 9, wobei der Verbinder (1) eine Anzahl von ersten Verlängerungen (10) in axialer Richtung aufweist, wobei die ersten Verlängerungen (10) zweite Vorsprünge (11) aufweisen, die sich vom ringförmigen Körper nach innen erstrecken, wobei das Ende (22) des Wellrohrs (2), das in den ringförmigen Körper eingesetzt ist, auf den zweiten Vorsprüngen (11) aufsitzt.

11. Leitungsanordnung gemäß einem der Ansprüche 8 bis 10, wobei die ersten Vorsprünge (8) des Verbinders (1) in Ausnehmungen (12) angeordnet sind, die zwischen den ersten Verlängerungen (10) in axialer Richtung definiert sind; wobei vorzugsweise die ersten Vorsprünge (8) sich von einer Lasche (13) erstrecken, die sich von einer Basis (14) der Ausnehmungen (12) in axialer Richtung zum ersten Ende (4) hin erstreckt.

12. Leitungsanordnung gemäß einem der Ansprüche 9 bis 11, wobei der elastische Abschnitt (71), der sich über den inneren Umfang des ringförmigen Körpers des Verbinders (1) erstreckt:
einen Schlitz (713) bildet, der mit einer Rippe des eingesetzten Wellrohrs (2) in Eingriff kommt; und/oder
eine nach innen vorstehenden Dichtungsringabschnitt bildet, der mit einer Rille des besagten eingesetzten Wellrohrs (2) in Eingriff kommt.

13. Leitungsanordnung gemäß einem der Ansprüche 8 bis 12, wobei der Verbinder (1) an der Außenoberfläche des starren Abschnitts (61, 62) des ringförmigen Körpers mindestens einen Vorsprung (9) aufweist, der sich in Umfangsrichtung über einen Teil des äußeren Umfangs des ringförmigen Körpers erstreckt und in eine entsprechende Ausnehmung (31) der Leitungskomponente (3) eingreift, in der der Verbinder (1) eingesetzt ist;
wobei vorzugsweise der Verbinder (1) außerdem am zweiten Ende (5) des ringförmigen Körpers eine Anzahl von Laschen (15) umfasst, die sich in axialer Richtung erstrecken und die aus der Leitungskomponente (3) herausragen, wenn der Verbinder (1) darin eingesetzt ist;
wobei vorzugsweise die Laschen (15) einen oder mehrere Nocken (151) aufweisen, die von dem ringförmigen Körper nach innen gerichtet sind und in eine Rille des eingesetzten Wellrohrs (2) eingreifen.

## Revendications

1. - Raccord (1) pour raccorder un tuyau ondulé (2) à un composant de gaines (3),
dans lequel le raccord (1) a un corps en forme d'anneau, ayant une première extrémité (4) et une seconde extrémité (5), dans lequel la première extrémité (4) est conçue pour l'insertion dans ledit composant de gaines (3) et dans lequel ladite seconde extrémité (5) est configurée pour insérer un tuyau ondulé (2) à l'intérieur de celle-ci,
dans lequel le corps en forme d'anneau comprend une portion rigide (61, 62) et une partie élastique (71, 72) ;
dans lequel une première partie de la portion élastique (71) s'étend dans la direction circonférentielle interne et externe sur tout le périmètre interne et externe du corps en forme d'anneau, et dans lequel une seconde partie de la portion élastique (72) s'étend dans la direction axiale du corps en forme d'anneau et relie les parties opposées de la portion rigide (61, 62) ;
dans lequel la portion rigide (61, 62) comprend une pluralité de premières protubérances (8) tournées vers l'intérieur du corps en forme d'anneau, configurées pour venir en prise dans une rainure d'un tuyau ondulé (2) lorsque ledit tuyau ondulé (2) est inséré dans le corps en forme d'anneau ;
et dans lequel la portion rigide (61, 62) comprend également au moins un moyen de fixation externe (9, 1 6) sur la surface externe du corps en forme d'anneau, configuré pour venir en prise avec ledit composant de gaines (3) lorsque ledit raccord (1) est inséré dans ledit composant de gaines (3) ;
dans lequel le raccord comprend sur la première extrémité (4) du corps en forme d'anneau des secondes protubérances (11) s'étendant vers l'intérieur et configurées pour former un siège pour l'extrémité (22) dudit tuyau ondulé (2) lorsqu'il est inséré dans le corps en forme d'anneau ;
**caractérisé en ce que** lesdites premières protubérances (8) sont agencées dans une position axialement décalée par rapport auxdites secondes protubérances (11).

2. - Raccord (1) selon la revendication 1, dans lequel la première partie de la portion élastique (71) relie les parties opposées de la portion rigide (61, 62) du corps en forme d'anneau.

3. - Raccord selon la revendication 1 ou 2, dans lequel le raccord (1) comprend sur la première extrémité (4) du corps en forme d'anneau un certain nombre de premiers prolongements (10) dans la direction axiale, dans lequel lesdits prolongements (10) ont lesdites secondes protubérances (11) s'étendant vers l'intérieur et configurées pour former un siège pour l'extrémité (22) dudit tuyau ondulé (2) lorsqu'il est inséré dans le corps en forme d'anneau.

4. - Raccord (1) selon la revendication 3, dans lequel lesdites premières protubérances (8) sont situées dans des renfoncements (12) définis entre lesdits premiers prolongements (10) dans la direction axiale,
de préférence dans lequel lesdites premières protubérances (8) s'étendent depuis un ergot (13) qui s'étend depuis une base (14) desdits renfoncements (12) dans la direction axiale vers la première extrémité (4).

5. - Raccord (1) selon l'une quelconque des revendications précédentes, dans lequel la portion élastique (71) s'étendant sur le périmètre interne du corps en forme d'anneau est configurée pour
former une fente (713) pour mettre en prise une arête d'un tuyau ondulé (2) lorsque ledit tuyau ondulé (2) est inséré dans le corps en forme d'anneau ; et/ou
former une portion de bague d'étanchéité faisant saillie vers l'intérieur pour venir en prise dans une rainure d'un tuyau ondulé (2) lorsque ledit tuyau ondulé (2) est inséré dans le corps en forme d'anneau.

6. - Raccord (1) selon l'une quelconque des revendications précédentes, qui comprend sur la surface externe de la portion rigide (61, 62) du corps en forme d'anneau au moins une protubérance (9) s'étendant dans la direction circonférentielle sur une partie du périmètre externe du corps en forme d'anneau et configurée pour venir en prise dans un renfoncement (31) correspondant d'un composant de gaines (3) lorsque le raccord (1) est inséré dans ledit composant de gaines (3),
de préférence dans lequel le raccord (1) comprend également sur la seconde extrémité (5) du corps en forme d'anneau un certain nombre d'ergots (15) s'étendant dans la direction axiale, de préférence dans lequel lesdits ergots (15) comprennent une ou plusieurs encoches (151) tournées vers l'intérieur du corps en forme d'anneau et configurées pour venir en prise dans une rainure d'un tuyau ondulé (2) lorsque ledit tuyau ondulé (2) est inséré dans le corps en forme d'anneau.

7. - Assemblage partiel comprenant un composant de gaines (3) tel qu'un adaptateur, un coude ou un élément de raccordement rigide conçu pour raccorder au moins 2 tuyaux ondulés flexibles ou semi-rigides les uns avec les autres, qui est en particulier un composant de gaines rigide avec une surface interne non ondulée ou plane au moins au niveau de sa partie terminale faisant partie du raccordement, et un raccord (1) selon les revendications précédentes, inséré à l'intérieur de celui-ci.

8. - Assemblage de tuyaux comprenant un tuyau ondulé (2) raccordé au composant de gaines (3) au moyen d'un raccord (1) selon la revendication 1 ;
dans lequel la première extrémité (4) est insérée dans ledit composant de gaines (3) et dans lequel ledit tuyau ondulé (2) est inséré dans ladite seconde extrémité (5) ; et
dans lequel la pluralité de premières protubérances (8) viennent en prise dans une rainure dudit tuyau ondulé (2) ;
dans lequel l'au moins un moyen de fixation externe (9, 16) vient en prise avec ledit composant de gaines (3) ;
dans lequel l'extrémité (22) dudit tuyau ondulé (2) inséré dans le corps en forme d'anneau repose sur lesdites secondes protubérances (11).

9. - Assemblage de tuyaux selon la revendication 8, dans lequel la première partie de la portion élastique (71) du raccord (1) relie les parties opposées de la portion rigide (61, 62) du corps en forme d'anneau.

10. - Assemblage de tuyaux selon la revendication 8 ou 9, dans lequel le raccord (1) comprend un certain nombre de premiers prolongements (10) dans la direction axiale, dans lequel lesdits premiers prolongements (10) ont des secondes protubérances (11) s'étendant vers l'intérieur du corps en forme d'anneau, dans lequel l'extrémité (22) dudit tuyau ondulé (2) inséré dans le corps en forme d'anneau repose sur lesdites secondes protubérances (11).

11. - Assemblage de tuyaux selon l'une quelconque des revendications 8 à 10, dans lequel lesdites premières protubérances du raccord (1) sont situées dans des renfoncements (12) définis entre lesdits premiers prolongements (10) dans la direction axiale ; de préférence dans lequel lesdites premières protubérances (8) s'étendent depuis un ergot (13) qui s'étend depuis une base desdits renfoncements (12) dans la direction axiale vers la première extrémité (4).

12. - Assemblage de tuyaux selon l'une quelconque des revendications 9 à 11, dans lequel la portion élastique (71) s'étendant sur le périmètre interne du corps en forme d'anneau du raccord (1) :
forme une fente (713) venant en prise avec une arête dudit tuyau ondulé (2) inséré ; et/ou
forme une portion de bague d'étanchéité faisant saillie vers l'intérieur venant en prise avec une rainure dudit tuyau ondulé (2) inséré.

13. - Assemblage de tuyaux selon l'une quelconque des revendications 8 à 12, dans lequel le raccord (1) comprend sur la surface externe de la portion rigide (61, 62) du corps en forme d'anneau au moins une protubérance (9) s'étendant dans la direction circonférentielle sur une partie du périmètre externe du corps en forme d'anneau et venant en prise dans un renfoncement correspondant (31) dudit composant de gaines (3) dans lequel le raccord (1) est inséré ;
de préférence dans lequel le raccord (1) comprend également sur la seconde extrémité (5) du corps en forme d'anneau un certain nombre d'ergots (15) s'étendant dans la direction axiale et qui font saillie depuis ledit composant de gaines (3) lorsque le raccord (1) est inséré à l'intérieur de celui-ci,
de préférence dans lequel lesdits ergots (15) comprennent une ou plusieurs encoches (151) tournées vers l'intérieur du corps en forme d'anneau qui viennent en prise dans une rainure dudit tuyau ondulé (2) inséré.
